(19) Europäisches Patentamt
European Patent Office
Office européen des brevets

(11) **EP 1 785 012 B1**

(12) **EUROPÄISCHE PATENTSCHRIFT**

(45) Veröffentlichungstag und Bekanntmachung des Hinweises auf die Patenterteilung:
**20.02.2008 Patentblatt 2008/08**

(21) Anmeldenummer: **05769644.5**

(22) Anmeldetag: **14.07.2005**

(51) Int Cl.:
*H05B 33/08* (2006.01)    *H05B 39/04* (2006.01)
*H02M 3/157* (2006.01)

(86) Internationale Anmeldenummer:
**PCT/DE2005/001245**

(87) Internationale Veröffentlichungsnummer:
**WO 2006/024252 (09.03.2006 Gazette 2006/10)**

(54) **VERFAHREN ZUR ANSTEUERUNG EINER ELEKTRISCHEN LICHTQUELLE DURCH PULSWEITENMODULATION**

METHOD FOR CONTROLLING AN ELECTRICAL LIGHT SOURCE BY PULSE WIDTH MODULATION

PROCEDE DE COMMANDE D'UNE SOURCE LUMINEUSE ELECTRIQUE PAR MODULATION DE LARGEUR D'IMPULSION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **01.09.2004 DE 102004042675**

(43) Veröffentlichungstag der Anmeldung:
**16.05.2007 Patentblatt 2007/20**

(73) Patentinhaber: **Conti Temic microelectronic GmbH**
**90411 Nürnberg (DE)**

(72) Erfinder:
• **JOOS, Uli**
  **88149 Nonnenhorn (DE)**
• **VOSS, Christian**
  **88693 Deggenhausertal (DE)**
• **ZWICK, Jochen**
  **88677 Markdorf (DE)**
• **SCHNELL, Josef**
  **88142 Wasserburg (DE)**

(56) Entgegenhaltungen:
EP-A- 0 935 404    DE-A1- 10 122 409
FR-A- 2 707 021    US-A- 5 859 506
US-A1- 2002 047 642    US-A1- 2004 095 185

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Ansteuerung einer elektrischen Lichtquelle durch Pulsweitenmodulation. Die Außenbeleuchtung in Kraftfahrzeugen wird nach dem Stand der Technik mittels Glüh-, Entladungslampen oder Leuchtdioden (Light Emitting Diode = LED) realisiert. Bei der Pulsweitenmodulation wird über ein Schaltmittel, in der Regel einen Leistungs-MOSFET, eine Versorgungspannung an die Lichtquelle weitergeschaltet, wobei die Versorgungsspannung oder eine davon abhängige Größe, wie beispielsweise der Strom oder die elektrische Leistung, gemessen und in Abhängigkeit davon die Pulsbreite gesteuert wird.

Im Gegensatz zu den sehr trägen Glüh- bzw. Gasentladungslampen haben LEDs eine sehr schnelle Ansprechzeit, was einerseits die Signalwirkung günstig beeinflusst, bspw. als Bremslicht, andererseits bei Schwankungen der Netzspannung entsprechend schnell zu sichtbaren Modulationen in der Leuchtstärke führt. Gerade für Kfz-Anwendungen muß die Leuchtleistung möglichst konstant eingehalten werden, treten jedoch wegen der niedrigen Versorgungsspannung und den hohen Lastschwankungen in Kfz-Bordnetzen zum Teil nicht unerhebliche Spannungsschwankungen an den Leuchtmitteln auf.

Eine Regelung der tatsächlichen Leuchtleistung mit Rückkopplung ist praktisch nicht möglich, da die permanente Erfassung der Leuchtleistung für Kfz-Anwendungen technisch wie kostenmäßig ungeeignet ist. Eine Regelung der zugeführten elektrischen Leistung am Leuchtmittel ist zwar technisch leichter realisierbar, führt jedoch dennoch zum Teil zu nicht unerheblichen Abweichungen der tatsächlichen Leuchtleistung. Noch stärker sind die Abweichungen bei einer reinen versorgungsspannungsbezogenen Steuerung ohne Rückkopplung.

Die Druckschrift EP 0 935 404 A2 beschreibt eine Schaltung zur Stabilisierung der Spannung an einer mittels Lichtschalter ein- und ausschaltbaren Lampe.

Zur Stabilisierung der Lampenspannung bei verringerter Verlustleistung an einer Lampe, die von einer schwankenden Versorgungsspannung gespeist wird, wird in den Lampenstromkeis ein zusätzlicher, mittels einer Ansteuerschaltung steuerbarer Zeitschalter einbezogen, der bei einer Versorgungsspannung kleiner als die vorgegebene Nenn-Brennspannung der Lampe den Zeitschalter dauernd eingeschaltet hält, und bei einer Versorgungsspannung größer als die Nenn-Brennspannung der Lampe die Ansteuerschaltung den Zeitschalter periodisch ein- und ausschaltet.

Für das Verhältnis von der Einschaltdauer zu der Periodendauer bei der Ansteuerung des Zeitschalters wird das Quadrat des Verhältnisses von der Nenn-Brennspannung zu der anstehenden Versorgungsspannung in Betracht genommen.

Allerdings schwankt die Versorgungsspannung innerhalb einer Pulsdauer, wobei diese Spannungsschwankung nicht unwesentlich bei der Helligkeitsschwankung der Lampe auswirkt.

Mit der die oben genannte Druckschrift beschreibende Schaltung kann eine Schwankung der Versorgungsspannung innerhalb einer Pulsdauer nicht geregelt werden.

Aufgabe der Erfindung ist es daher, ein geeignetes Verfahren zur Ansteuerung von Leuchtmitteln, insbesondere Leuchtdioden vorzustellen. Diese Erfindung wird durch die Merkmale der Hauptansprüche gelöst. Vorteilhafte Weiterbildungen sind den Unteransprüchen zu entnehmen.

Dazu wird für die Lichtquelle eine Kennlinie der Helligkeit in Abhängigkeit von der Versorgungsspannung oder der davon abhängige Größe vorgegeben und aus der gemessenen Versorgungsspannung oder der davon abhängigen Größe mit der Kennlinie ein tatsächlicher Helligkeitswert ermittelt und mit einem Helligkeitsvorgabewert verglichen und die Pulsbreite in Abhängigkeit davon gesteuert.

Die Erfindung beschreibt ein Verfahren, das durch geeignete Ansteuerung mit den üblichen PWM Frequenzen die Helligkeit des Scheinwerfers über allen Bordnetzbedingungen des Kfz konstant hält. Die Erfindung basiert auf der Erkenntnis, dass die Leuchtleistung gegenüber der Versorgungsspannung oder den davon abhängigen elektrischen Größen, wie Strom oder elektrischer Leistung, eine nicht lineare Abhängigkeit aufweist, so dass bei entsprechend starken Spannungsschwankungen deutliche Abweichungen zwischen elektrischer und Leuchtleistungsänderung auftreten.

Vorzugsweise wird die Versorgungsspannung während des Pulses zumindest zweimal erfasst und die Pulsbreite des aktuellen oder eines nachfolgenden Pulses in Abhängigkeit von den erfassten Werten angepasst. Alternativ zur Versorgungsspannung kann auch eine davon abhängige Größe, beispielsweise der Strom oder die elektrische Leistung als Produkt aus gemessenem Strom und Spannung gemessen und zur Anpassung der Pulsbreite verwendet werden.

Dies kann vorzugsweise erfolgen, indem Messwerte der Versorgungsspannung oder der dazu proportionalen Größe während des Pulses erfasst und dabei aus allen Messwerten dieses Pulses ein Helligkeitsgesamtwert ermittelt und dieser mit einem Vorgabewert verglichen und bei Erreichen des Vorgabewertes der Puls beendet wird.

Alternativ dazu ist, insbesondere bei innerhalb eines Pulsrahmens nicht abbrechbarer Pulsbreite, auch denkbar, aus allen Messwerten eines Pulses zunächst nur einen Gesamtwert zu bestimmen. Der Gesamtwert entspricht somit der Fläche unter den gemessenen bzw. davon abhängigen, abgeleiteten Werten. Danach wird die Abweichung zwischen Vorgabewert und ermitteltem Gesamtwert bestimmt und die Pulsbreite des darauffolgenden Pulses in Abhängigkeit von der Abweichung zwischen Vorgabewert und ermitteltem Gesamtwert angepasst. Die Abweichung wird also im jeweils darauffolgenden Puls kompensiert, oder anders ausgedrückt, die aktuelle Pulsbreite jeweils in Abhängigkeit von dem Vorgabewert und der Abweichung des vorangehenden Pulses bestimmt. Der Vorgabewert entspricht somit einer Fläche, wie sie bei konstanter Versorgungsspannung und vorgegebener Pulsbreite entstehen würde. Die Abweichung kann daher als entsprechender Flächenunterschied durch bloße Subtraktion bestimmt werden und als Korrekturwert in den Vorgabewert für den folgenden Puls verwendet werden.

Versucht man, eine funktionale Abhängigkeit der Pulsbreite von der aktuellen Versorgungsspannung und der Abweichung der mittleren Helligkeit vorangehender Pulse darzustellen, ist dies äußerst aufwendig und mit hinreichender Genauigkeit nur durch ein Polynom zumindest 5. Ordnung möglich, was für eine automatische Steuerung kaum praktikabel ist. Eine besonders bevorzugte Weiterbildung des Verfahrens besteht nun darin, diese komplizierte, aber an sich ja für die Lichtquelle konstante Abhängigkeit nicht unmittelbar zu berechnen, sondern in einer Kennlinie abzuspeichern, die für eine permanente Zuschaltung, also einem Duty Cycle von 100% den jeweiligen Gesamtwert als 100%-Kennwert ergibt. Der 100%-Kennwert entspricht also der jeweiligen Fläche unter einem Puls mit Breite des Pulsrahmens, also mit 100% PWM. Aus dem Quotienten aus dem um die Abweichung des vorhergehenden Pulses korrigierten Vorgabewert und dem 100%-Kennwert kann aber damit auf einfachste Weise unmittelbar der erforderliche Duty Cycle und damit die Pulsbreite abgeleitet werden. Dadurch reduziert sich der numerische Aufwand für eine derartige Steuerung erheblich.

Die Erfindung wird nachfolgend anhand von Ausführungsbeispielen unter Bezugnahme auf die Figuren beschrieben.

Die Helligkeits-Kennlinie einer LED kann dem Datenblatt entnommen oder gemessen und daraus eine Funktion (z.B. als ein Polynom 5.Ordnung) interpoliert werden

Fig.1 zeigt einen typischen Verlauf einer elektrischen LED-Kennlinie und das zugehörige Polynom:

$$U_{\mathrm{LED}}(\mathrm{I_{LED}}) = a \cdot I_{LED}{}^5 + b \cdot I_{LED}{}^4 + c \cdot I_{LED}{}^3 + d \cdot I_{LED}{}^2 + e \cdot I_{LED} + f \qquad \textbf{(Gl. 1)}$$

mit a,b,c,d,e,f = Koeffizienten des linearen Polynoms 5.Ordnung U_LED = f (I_LED)

Fig.2 zeigt ein elektrisches Ersatzschaltbild der Anordnung. Durch Verwendung dieses elektrischen Modells und dem Modell der LEDs aus (Gl.1) können alle elektrischen Parameter für jeden Betriebspunkt iterativ errechnet werden:

$$I_{\mathrm{LED}}(U_{\mathrm{Batt}}) = \frac{U_{Batt} - \mathrm{n} \cdot U_{\mathrm{LED}}(I_{\mathrm{LED}})}{Rv} \cdot \mathrm{m} \qquad \textbf{(Gl. 2)}$$

mit n = Anzahl in Serie geschalteter LEDs

m = Anzahl paralleler LED Pfade

Eine hohe Stabilität der Helligkeit der LED läßt sich nun erreichen, wenn die Charakteristik der Helligkeit ebenfalls mathematisch beschrieben und in das Modell ' integriert wird. Hierzu wird die Funktion der Lichtmenge in Abhängigkeit von einer Steuergröße benötigt.

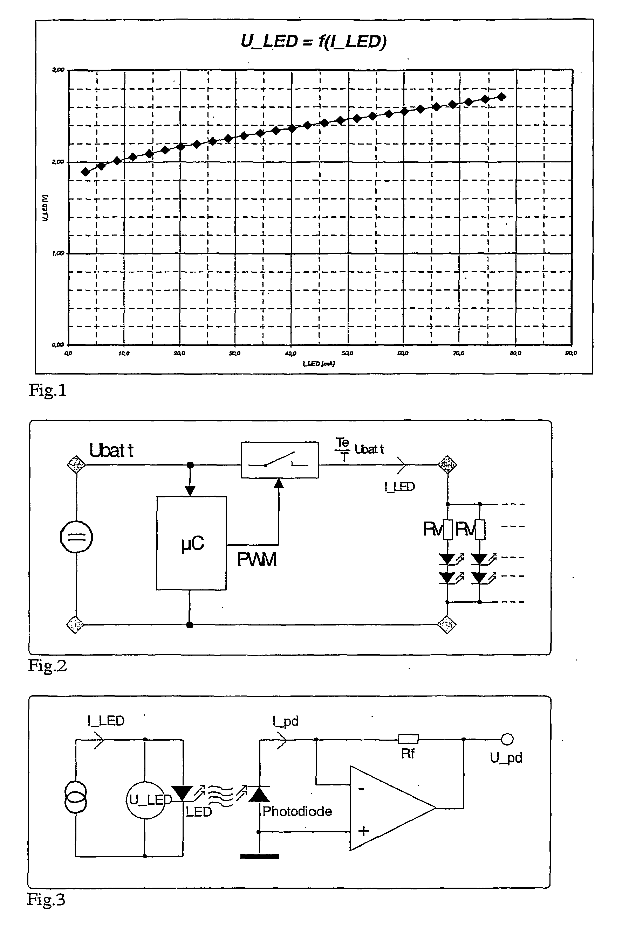

Die von der LED abgegeben Lichtmenge, kann z.B. mit der Anordnung gemäß Fig. 3 gemessen werden:

Dabei wird der Strom in die LED eingeprägt und für jeden Arbeitspunkt die zugehörige Spannung an der LED gemessen. Das abgegebene Licht der LED wird durch optische Ankopplung einer Photodiode aufgefangen und mittels Elektrometerverstärker in eine proportionale Spannung umgewandelt. Die Ausgangsspannung des Verstärkers ist demnach proportional zur abgegebenen Lichtmenge der LED.

Eine Eichung der abgegebenen Lichtmenge über dem Strom ist dabei vorteilhaft, aber nicht zwingend notwendig, weil der Arbeitspunkt der LED auch anderweitig, z.B. über den Strommittelwerte, festgelegt werden kann.

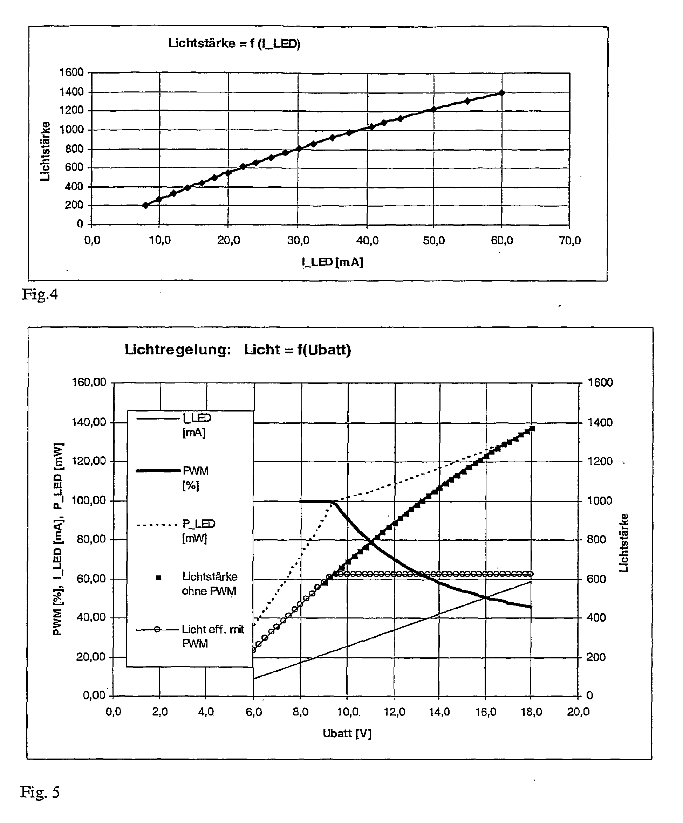

Fig.4 zeigt eine zur abgegebenen Lichtmenge proportionale Größe in Abhängigkeit vom Strom in der LED.

Das von der LED abgegebene Licht kann mittels Polynom n-ter Ordnung (z.B. n=2) beschrieben werden kann.

$$\phi_{\mathrm{LED}}(\mathrm{I_{LED}}) = g \cdot I_{\mathrm{LED}}(Ubatt)^2 + h \cdot I_{LED} + i \, ; \qquad \textbf{(Gl. 3)}$$

mit g,h,i = Koeffizienten des linearen Polynoms 2.0rdnung Lichtstärke = f (I_LED)

Durch Kombination des elektrischen Modells (Gl.1, Gl.2) mit dem physikalischen Modell der LED (Gl.3) wie-

derum läßt sich die PWM-Steuerkennlinie der LED in Abhängigkeit von der Versorgungsspannung Ubatt per Iteration ermitteln.

Fig. 5 zeigt diese Kennlinie beispielhaft für zwei in Serie geschaltete, SMD-LEDs mit einem Vorwiderstand von 220 Ohm. Dabei wird der Duty Cycle, also die Pulsbreite eines PWM-Pulses im Verhältnis zur Pulsrahmenbreite, so gesteuert, daß die berechnete effektive LED Lichtmenge konstant bleibt.

$$PWM\,(\mathrm{U_{Batt}}) = \frac{\phi_{soll}}{\phi_{100\%}} = \frac{\phi_{soll}}{\mathrm{j \cdot Ubatt^2 + k \cdot Ubatt + l}}; \qquad \textbf{(Gl.4a)}$$

mit j,k,l = Koeffizienten des Polynoms Lichtmenge = f(Ubatt)

Da die von der LED abgegebene Lichtleistung mit guter Näherung proportional zum Mittelwert des Stromes in der LED ist, kann der Duty Cyle alternativ auch aus der Mittelwert des Stromes berechnet werden

$$PWM\,(\mathrm{U_{Batt}}) = \frac{I_{soll}}{I_{100\%}} = \frac{I_{soll}}{\mathrm{k \cdot Ubatt + l}} \qquad \textbf{(Gl.4b)}$$

mit k,l = Koeffizienten des Polynoms I_LED_avg = f(Ubatt)

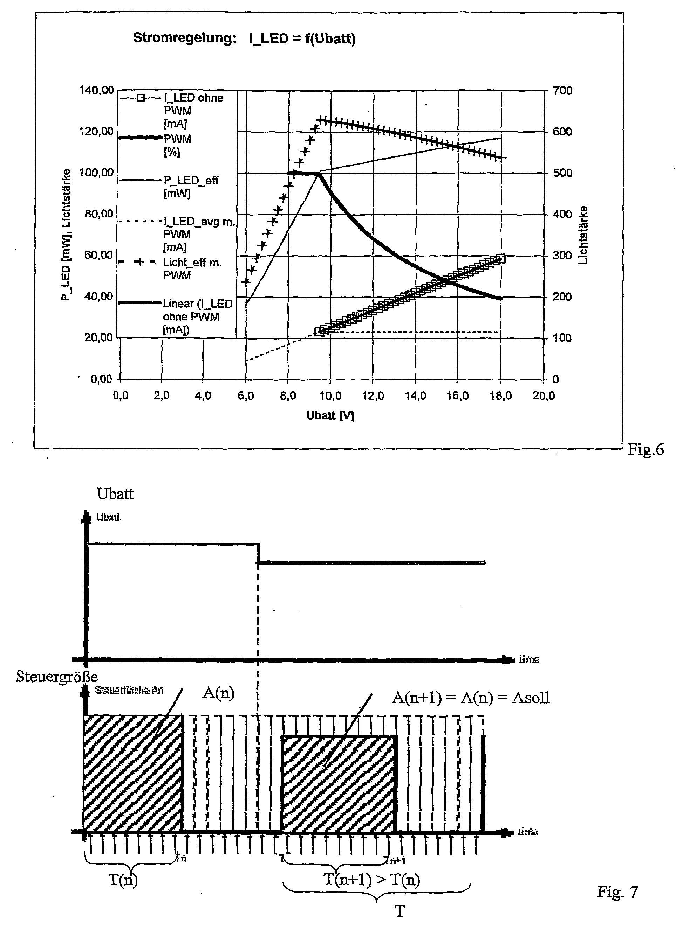

Fig. 6 zeigt aber, daß bei der reinen Stromregelung die Lichtmenge nicht 100% konstant ist, d.h. je nach LED Typ über die Versorgungsspannung variiert. Ebenfalls denkbar wäre eine Steuerung der elektrischen Leistung in der LED Matrix, aber auch hier variiert die Lichtmenge der LED über der Versorgungsspannung. Durch Ableitung eines Helligkeitswertes unter Verwendung der Kennlinie und Anpassung der PWM in Abhängigkeit von einem entsprechenden Helligkeitsvorgabewert kann dies mit guter Näherung ausgeglichen werden.

Zur Realisierung einer PWM Steuerung wird nun vorteilhafter Weise zusätzlich die Versorgungsspannung Ubatt von einem Mikroprozessor mit einem Vielfachen der Schaltfrequenz abgetastet der Leistungsschalter entsprechend der ermittelten Kennlinie pulsweitenmoduliert angesteuert.

Da gerade im Automobil die Bordnetzspannung auch kurzfristig nicht konstant bleibt, kann es zu einer sichtbaren Änderung in der Helligkeit führen, insbesondere wenn die Spannungsänderung innerhalb eines Pulses auftritt.

Dies kann vorzugsweise, je nach Steuercharakteristik (Strom-, Leistungs- oder Lichtstrom-Zeit-Fläche, im folgenden vereinfacht Pulsfläche genannt), durch verschiedene Verfahren korrigiert werden:

1. Im jedem Einschaltzyklus wird die aktuelle Fläche ständig durch Aufsummierung ermittelt und jeweils im darauffolgenden Puls ein entsprechender Korrekturwert berücksichtigt.

Dieses Verfahren eignet sich besonders bei Verwendung von µControllern mit digitalen Timern. Hierbei muß nämlich die Pulsweite bereits vor Beginn des Einschaltzyklus festgelegt werden. Außerdem wirkt sich ein geringer Oversampling-Faktor nur auf den Korrekturwert nicht aber auf die PWM Auflösung aus.

2. Die Fläche des aktuellen Pulses wird kontinuierlich durch Aufsummierung ermittelt und der Puls bei Erreichen des Sollwertes beendet. Diese Verfahren eignet sich besonders bei sehr hohen Oversampling Raten und damit einer hohen Auflösung der resultierenden Pulsweitenmodulation.

Beispiel für ein Verfahren 1:

Aus der anwendungsspezifisch vorgegebenen Helligkeit und der Frequenz der Ansteuerung wird eine Puls-fläche $(A_{soll})$ errechnet, die im Mittel pro Periode ($T$) erreicht werden soll. Außerdem wird unmittelbar vor Beginn des PWM Zyklus' die zu steuernde Größe, bspw. die Versorgungsspannung ermittelt. Aus der Kennlinie ergibt sich dann der 100%-Kennwert, bspw. bezogen auf die Helligkeit $\Phi_{100\%}$

Durch Verwendung von (Gl.4) errechnet sich die Pulsdauer $T_n$ zu

$$PWM\,(\mathrm{U_{Batt}}) = \frac{T_n}{T} = \frac{\phi_{soll}}{\phi_{100\%}} \quad \text{bzw. allgemein}: \; T_n = \frac{A_{soll}}{A_n}; \quad \textbf{(Gl.5)}$$

Während jeder Periode n wird die tatsächliche Pulsfläche ($A_{n\,ist}$) durch Mehrfachabtastung (Oversampling) und Aufsummierung der Flächen ermittelt und daraus das Einschaltverhältnis und damit die Pulsfläche nach (Gl. 4) bestimmt. Hierbei ist darauf hinzuweisen, dass entweder aus den ermittelten Messwerten unter Verwendung einer Kennlinie die zugehörige Flächengröße ermittelt wird, also jedem Versorgungsspannungsmesswert unter Berücksichtigung der Abtasthäufigkeit Helligkeitsbeitrag zugewiesen und diese aufsummiert werden, oder bei Vernachlässigung der nicht völlig linearen Abhängigkeit einfach die Messwerte, bspw. die Spannungsabtastwerte, direkt aufsummiert und diese Summe dann in einen Helligkeitsgesamtwert umgewandelt wird. Ob nun als physikalische Einheit ein Helligkeitswert, eine mittlere elektrische Leistung oder der mittlere Strom an der LED verwendet wird, ist dabei für die nachfolgende Ableitung der Korrekturfläche und Bestimmung der Breite des nachfolgenden Pulses unerheblich.

Die Differenz ($\Delta A_n$) aus Ist- und Sollwert errechnet sich für die Puls n (mit n>1) jeweils zu

$$\Delta A_n = A_{n\,ist} - A_{soll} + \Delta A_{n-1} \qquad\qquad \textbf{(Gl. 6)}$$

wobei Asoll der grundsätzlich konstante Vorgabewert, bspw. die gewünschte mittlere Helligkeit, ist und $\Delta A(n-1)$ der aus dem vorherigen Puls übernommene Korrekturwert,

Im darauffolgenden Puls n+1 muss dann jeweils diese Differenz (Gl.6) vom Sollwert des aktuellen Pulses abgezogen werden.

Die Pulsdauer $T_{n+1}$ für den jeweils darauffolgenden Pulse ergibt sich damit zu

$$T_{n+1} = \frac{A_{soll} - \Delta A_n}{A_{n+1}}. \qquad\qquad \textbf{(Gl. 7)}$$

Die Abtastung der Steuergröße Ubatt erfolgt zweckmäßigerweise mit einem ganzzahligen Vielfachen der PWM Frequenz, wobei die Auflösung der Abtastung dabei die Genauigkeit der Korrektur bestimmt.

Anstelle der Versorgungsspannung als Steuergröße kann selbstverständlich auch der Strom oder die elektrischen Leistung verwendet werden.

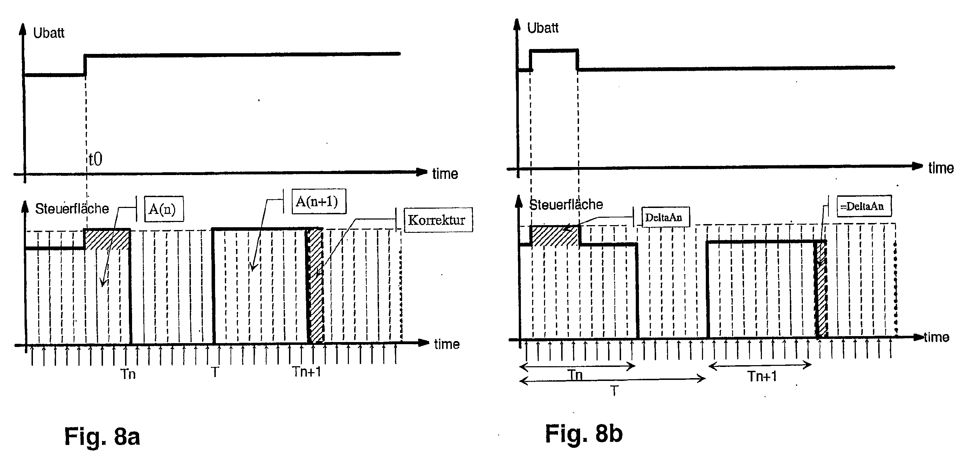

Fig. 8a und 8b zeigen typische Korrekturverläufe für dieses Verfahren. Mit Beginn des Pulses n wird jeweils ausgehend von dem aktuellen Messwert der Steuergröße, hier also der Versorgungsspannung die Pulsdauer T(n) bzw. der Duty Cycle vorgegeben.

Die Steuergröße wird nachfolgend während der Pulsdauer wiederum zyklisch erfasst und entsprechende Helligkeitswerte mit Hilfe der Kennlinie abgeleitet und aufsummiert. Soweit die Helligkeitskennlinie vernachlässigt werden kann, kann natürlich auch die Steuergröße, also die Versorgungsspannung selbst, der Strom oder die elektrische Leistung direkt als Fläche aufsummiert werden.

Schwankt die Versorgungsspannung innerhalb dieses Pulses n, hier zum Zeitpunkt t0, so kommt es zu einer in diesem Beispiel positiven Abweichung der Gesamthelligkeit, die in der Fig. 8a in der Fläche A(n) straffiert hervorgehoben ist.

Ist die Pulsdauer im Mikrocontroller während eines Pulses unveränderlich, kann auf diese Abweichung nicht unmittelbar reagiert werden. Dies ist aber auch nicht so entscheidend, da in der bevorzugten Ausgestaltung diese Abweichung beim nächsten Puls n+1 berücksichtigt und die Pulsdauer T(n+1) entsprechend angepasst, hier also reduziert wird, wie dies durch entsprechende Straffur wieder angedeutet wurde. Der Mittelwert beiden Flächen, also (A(n)) +A(n+1)/2 stimmt wieder mit dem Vorgabewert überein, sofern die Spannung nicht erneut schwankt. Sollte es erneut zu einer Abweichung kommen, wird im jeweils nachfolgenden Puls gegengesteuert. Der besondere Vorteil ist also, dass die Anpassung der Pulsweite durch eine einfache (vorzeichenbehaftete) Addition, also eine entsprechende Verlängerung oder Verkürzung des darauffolgenden Pulses realisiert wird.

Besonders deutlich erkennbar wird dieses Verfahren bei einer kurzzeitigen Schwankung der Versorgungsspannung innerhalb eines Pulses, wie dies Fig. 8b skizziert. Herkömmliche Steuerungen reagierten auf derartige, wieder straffiert angedeutete Abweichungen überhaupt nicht. In dem hier vorgestellten Verfahren wird durch die zyklische Abtastung der Steuergröße diese Abweichung jedoch erfasst und der nachfolgende Puls in seiner Länge entsprechend angepasst, d.h. die Fläche ist also um die straffierte Fläche kleiner als die der Versorgungsspannung Ubatt zu diesem Zeitpunkt entsprechende Fläche, was wiederum die entsprechende Pulsbreite T(n+1) ergibt.

Vorteil dieses Verfahrens ist, dass die Häufigkeit der Abtastung der Steuergröße auch kleiner als die Schrittweite der PWM sein kann, sofern die Schwankungshäufigkeit und Schwankungsstärke der Steuergröße verhältnismäßig gering ist und somit der relative Fehler bei der Bestimmung der Abweichung, also der Fehler bei der Bestimmung der Größe der straffierten Fläche vernachlässigbar ist.

Beispiel für ein Verfahren 2:

Aus der vorgegebenen Helligkeit und der Frequenz der Ansteuerung wird eine Pulsfläche ($A_{soll}$) errechnet, die im Mittel pro Periode ($T$) erreicht werden soll. Außerdem wird unmittelbar vor Beginn des PWM Zyklus' die zu steuernde Größe ($A_n$) nach (Gl.5) ermittelt. Während jeder Periode n wird die tatsächliche Pulsfläche ($A_{n\,ist}$) durch Abtastung und Aufsummierung der Flächen ermittelt und bei Erreichen des Sollwertes der Puls unmittelbar beendet.

Durch diese beiden einfachen Korrekturmechanismen bleibt die mittlere Helligkeit der LED(s) auch bei schnellen Änderungen der Steuergröße konstant, die kurzfristige Abweichung vom Mittelwert wird vom menschlichen Auge nicht wahrgenommen.

Fig. 7 skizziert nun dieses Verfahren der automatischen Beendigung des Pulses in Abhängigkeit von der aufsummierten Fläche. Für die zwei aufeinanderfolgenden Pulse n und n+1 wie auch die nachfolgenden Pulse ist eine konstante Pulsrahmenbreite T vorgegeben. Mit Beginn jedes Pulses wird die Steuergröße, hier beispielsweise die Versorgungsspannung Ubatt zyklisch mit einer Abtastfrequenz abgetastet, ggfs. über die Helligkeitskennlinie ein Helligkeitswert zugeordnet und diese Helligkeitswerte aufsummiert. Wiederum lässt sich dieses Verfahren natürlich auch unter Vernachlässigung der nicht völlig linearen Abhängigkeit direkt auf die Versorgungsspannung oder eine dazu abhängige Größe anwenden, in die Versorgungsspannung selbst aufsummiert wird.

Dies wird durch die straffierte Fläche A(n) skizziert. Erreicht die Fläche A(n) einen Vorgabewert Asoll, wird zum Zeitpunkt T(n) der Puls beendet und beginnt nach Ablauf der Pulsrahmenbreite T der folgende Puls (n+1). Da die Versorgungsspannung mittlerweile jedoch abgesunken ist, sind die Flächenbeiträge je Abtastzeitpunkt nun geringer. Dementsprechend dauert der Puls (n+1) entsprechend länger, bis dessen Flächenwert wieder dem Vorgabewert entspricht und der zweite Puls beendet wird. Beide Flächenwerte A(n) wie auch A(n+1) entsprechen somit mit entsprechender Näherung dem Vorgabewert Asoll. Es ist somit deutlich erkennbar, dass die Frequenz zur Abtastung der Steuergröße, hier der Versorgungsspannung unmittelbar die mögliche PWM-Auflösung bestimmt.

Schwankungen der Versorgungsspannung innerhalb eines Pulses, wie in Fig. 8 skizziert, können bei diesem Verfahren des automatischen Pulsendes natürlich ebenfalls unmittelbar ausgesteuert und die Pulsbreite entsprechend angepasst werden.

Diese Verfahren erlauben die Ansteuerung von LED Modulen über simple Vorwiderstände. Durch die geeignete Ausführung des Ansteuerverfahrens können auch dynamische Schwankungen der Bordnetzspannung ohne wahrnehmbare Modulation der Leuchtstärke ausgesteuert werden.

Der Erfindung liegt die Tatsache zugrunde, daß die Ansteuerung des LED Moduls üblicherweise bereits über einen pulsweitenmodulierbaren Ausgang erfolgt. Kann diese PWM Ansteuerung so ausgeführt werden, daß die Helligkeit des Scheinwerfers bei allen Schwankungen der Bordnetzspannung konstant bleibt, so kann der Stromregler im Scheinwerfer (LED Modul) zugunsten einfacher Vorwiderstände ersetzt werden. Die Elektronik im Scheinwerfer kann entfallen, wodurch dieser erheblich kostengünstiger hergestellt werden kann. Eine geeignete Schaltfrequenz zur Ansteuerung von LEDs liegt idealerweise im Bereich größer 1kHz. Sie muß mindestens so hoch gewählt werden, daß alle auftretenden Netzschwankungen von der Steuerung ausgesteuert werden können, ohne vom menschlichen Auge wahrgenommen zu werden.

**Patentansprüche**

1.  Verfahren zur Ansteuerung einer elektrischen Lichtquelle durch Pulsweitenmodulation aus einer Versorgungsspannung , wobei die Versorgungsspannung (U) oder eine davon abhängige Größe (1, P) gemessen und in Abhängigkeit davon die Pulsbreite gesteuert wird,
    **dadurch gekennzeichnet, dass**

    i) für die Lichtquelle eine Kennlinie der Helligkeit in Abhängigkeit von der Versorgungsspannung oder der davon abhängige Größe vorgegeben wird,
    ii) aus der gemessenen Versorgungsspannung oder der davon abhängigen Größe mit der Kennlinie ein tatsächlicher Helligkeitswert ermittelt und mit einem Helligkeitsvorgabewert verglichen und die Pulsbreite in Abhängigkeit davon gesteuert wird,
    iii) wobei die Versorgungsspannung (U) oder die davon abhängige Größe während der Pulsrahmenbreite (T) zumindest zweimal erfasst und die Pulsbreite (T(n), T(n+1)) des aktuellen oder eines nachfolgenden Pulses in Abhängigkeit von den erfassten Werten der Versorgungsspannung oder der davon abhängigen Größe angepasst wird.

**2.** Verfahren nach Anspruch 1, **dadurch gekennzeichnet, dass** Messwerte der Versorgungsspannung (U) oder der dazu abhängigen Größe (I, P) während der Pulsrahmenbreite erfasst und dabei aus allen Messwerten dieses Pulsrahmens ein Gesamtwert (A(n)) ermittelt und dieser mit einem Vorgabewert (Asoll) verglichen und bei Erreichen des Vorgabewertes der Puls beendet wird.

**3.** Verfahren nach Anspruch 1, **dadurch gekennzeichnet, dass** Messwerte der Versorgungsspannung (U) oder der dazu abhängigen Größe (I, P) während eines Pulses (P(n)) erfasst und aus allen Messwerten dieses Pulses ein Gesamtwert (A(n)) ermittelt und dieser mit einem Vorgabewert (Asoll) verglichen wird und die Pulsbreite (T(n+1)) des darauf folgenden Pulses in Abhängigkeit von der Abweichung zwischen Vorgabewert und ermitteltem Gesamtwert angepasst wird.

**4.** Verfahren nach Anspruch 3, **dadurch gekennzeichnet, dass**

a) eine Kennlinie vorgegeben ist, aus der sich in Abhängigkeit von der Versorgungsspannung oder der davon abhängigen Größe jeweils ein 100%- HelligkeitsKennwert für einen Puls bei permanenter Zuschaltung der Versorgungsspannung (PWM=100%)ergibt,
b) für jeden Puls unmittelbar vor oder bei dessen Beginn die aktuelle Versorgungsspannung oder die davon abhängige Größe ermittelt wird und aus der Kennlinie der entsprechende 100%-Helligkeitskennwert bestimmt wird,
c) aus dem Vorgabewert (Asoll) der Helligkeit und der Abweichung des vorangehenden Pulses (A(n)-Asoll) ein korrigierter Vorgabewert für den folgenden Puls ermittelt wird und
d) aus dem Quotienten aus korrigiertem Vorgabewert und 100%-Helligkeitskennwert die Pulsbreite des aktuellen Pulses abgeleitet wird.

**5.** Verwendung eines Verfahrens nach einem der vorangehenden Ansprüche zur Ansteuerung von zumindest einer Leuchtdiode (LED).

**Claims**

**1.** A method for triggering an electric light source by means of pulse width modulation from a supply voltage, wherein the supply voltage (U) or a value which is subject to it (I, P) is measured and the pulse width is controlled subject to this, **characterized in that**

i) for the light source, a characteristic curve of the brightness is specified which depends on the supply voltage or on the value which is subject to it
ii) from the measured supply voltage or from the value which is subject to it with the characteristic curve, an actual brightness value is determined and is compared with a set brightness value, and the pulse width is controlled subject to this
iii) wherein the supply voltage (U) or the value which is subject to it is recorded at least twice during the pulse frame width (T), and the pulse width (T(n), T(n+1)) of the current or one of the subsequent pulses is adapted subject to the recorded values of the supply voltage or of the value which is subject to it.

**2.** A method according to claim 1, **characterized in that** measured values of the supply voltage (U) or the value (I, P) which is subject to these are recorded during the pulse frame width and during this process, an overall value (A (n)) is determined from all measured values of this pulse frame, and said overall value is compared with a set value (Asoll), and is terminated when the set value of the pulse is reached.

**3.** A method according to claim 1, **characterized in that** the measured values of the supply voltage (U) or the value which is subject to them (I, P) are recorded during a pulse (P(n)) and an overall value (A(n)) is determined from all measured values of said pulse, and said overall value is compared with a set value (Asoll) and the pulse width (T (n+1)) of the subsequent pulse is adapted subject to the deviation between the set value and the determined overall value.

**4.** A method according to claim 3, **characterized in that**

a) a characteristic curve is specified, from which subject to the supply voltage or the value which is subject to it, in each case a 100% brightness nominal value results for a pulse when the supply voltage (PWM=100%) is switched on permanently

b) for each pulse directly or before it starts, the current supply voltage or the value which is subject to it is determined and from the characteristic curve, the corresponding 100% brightness value is determined

c) from the set value (Asoll) of the brightness and from the deviation of the previous pulse (A(n)-Asoll), a corrected set value is determined for the subsequent pulse, and

d) from the quotients from the corrected set value and the 100% brightness value, the pulse width of the current pulse is derived.

5. The utilisation of a method according to any one of the preceding claims for triggering at least one light diode (LED).

**Revendications**

1. Procédé de pilotage d'une source lumineuse électrique par modulation d'impulsions en largeur à partir d'une tension d'alimentation, la tension d'alimentation (U) ou une grandeur qui en dépend (I, P) étant mesurée, et la largeur d'impulsions étant commandée en fonction de cela,
**caractérisé en ce que**

i) pour la source lumineuse, une courbe caractéristique de la luminance est prédéfinie en fonction de la tension d'alimentation ou de la grandeur qui en dépend,

ii) à partir de la tension d'alimentation mesurée ou de la grandeur qui en dépend, une valeur de luminance effective est déterminée avec la courbe caractéristique et est comparée à une valeur prédéfinie de luminance, et la largeur d'impulsions est commandée en fonction de cela,

iii) la tension d'alimentation (U) ou la grandeur qui en dépend étant détectée au moins deux fois pendant la largeur de cadre d'impulsions (T), et la largeur d'impulsions (T(n), T(,+1)) de l'impulsion actuelle ou d'une impulsion suivante étant adaptée en fonction des valeurs détectées de la tension d'alimentation ou de la grandeur qui en dépend.

2. Procédé selon la revendication 1, **caractérisé en ce que** des valeurs de mesure de la tension d'alimentation (U) ou de la grandeur qui en dépend (I, P) sont détectées pendant la largeur de cadre d'impulsions, et **en ce que**, à partir de toutes les valeurs de mesure de ce cadre d'impulsions, une valeur globale (A(n)) est déterminée, et cette valeur est comparée à une valeur prédéfinie (Asoll), et l'impulsion est terminée lorsque cette valeur prédéfinie est atteinte.

3. Procédé selon la revendication 1, **caractérisé en ce que** des valeurs de mesure de la tension d'alimentation (U) ou de la grandeur qui en dépend (I, P) sont détectées pendant une impulsion et **en ce que**, à partir de toutes les valeurs de mesure de cette impulsion, une valeur globale (A(n)) est déterminée, et cette valeur est comparée à une valeur prédéfinie (Asoll), et la largeur d'impulsions (T(n+1)) de l'impulsion suivante est adaptée en fonction de l'écart entre la valeur prédéfinie et la valeur globale déterminée.

4. Procédé selon la revendication 3, **caractérisé en ce que**

a) il est prédéfini une courbe caractéristique à partir de laquelle, en fonction de la tension d'alimentation ou de la grandeur qui en dépend, il résulte respectivement une valeur caractéristique de luminance de 100% pour une impulsion en présence d'une connexion permanente de la tension d'alimentation (PWM=100%),

b) pour chaque impulsion, immédiatement avant ou lors de son début, la tension d'alimentation actuelle ou la grandeur qui en dépend est déterminée et la valeur caractéristique de luminance de 100% correspondante est définie à partir de la courbe caractéristique,

c) à partir de la valeur prédéfinie (Asoll) de la luminance et de l'écart de l'impulsion (A(n)-Asoll) précédente, une valeur prédéfinie corrigée est déterminée pour l'impulsion suivante et

d) à partir du quotient issu de la valeur prédéfinie corrigée et de la valeur caractéristique de luminance de 100%, la largeur d'impulsions de l'impulsion actuelle est dérivée.

5. Utilisation d'un procédé selon une des revendications précédentes pour le pilotage d'au moins une diode lumineuse (LED).

Fig.1

Fig.2

Fig.3

Fig.4

Fig. 5

Stromregelung: I_LED = f(Ubatt)

Fig.6

Fig. 7

**Fig. 8a**

**Fig. 8b**

EP 1 785 012 B1

**EP 1 785 012 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0935404 A2